Europäisches Patentamt

European Patent Office

Office européen des brevets

(19)

(11) **EP 0 794 475 A1**

(12) **EUROPEAN PATENT APPLICATION**
published in accordance with Art. 158(3) EPC

(43) Date of publication:
10.09.1997 Bulletin 1997/37

(51) Int. Cl.⁶: **G05B 19/416**

(21) Application number: 96932000.1

(86) International application number:
PCT/JP96/02784

(22) Date of filing: 26.09.1996

(87) International publication number:
WO 97/12306 (03.04.1997 Gazette 1997/15)

(84) Designated Contracting States:
DE

(30) Priority: 26.09.1995 JP 270664/95

(71) Applicant: FANUC LTD
Minamitsuru-gun, Yamanashi 401-05 (JP)

(72) Inventors:
• NIHEI, Ryo
Yamanashi 403 (JP)

• YASUMURA, Mitsuhiro
Room 8-306
FanucManshonharimo
Yamanashi 401-05 (JP)
• NARA, Kazuharu
Ibaraki 300 (JP)

(74) Representative: Billington, Lawrence Emlyn et al
Haseltine Lake & Co.,
Imperial House,
15-19 Kingsway
London WC2B 6UD (GB)

(54) **DUTY-BASED MINIMUM-TIME CONTROL METHOD FOR ROBOT**

(57) A minimum-time control method for a robot in consideration of an operating duty to prevent an overheat of a servo motor for driving each axis of the robot. As a playback operation of the robot is started, monitoring of the motor current for each axis is started (S1). Accelerations Aac and Adc are obtained according to a concept of the minimum-time control (S3 - S6). The obtained accelerations are multiplied by an adjusting parameter k (having an initial value of 1) to obtain Aac' and Adc' (S7). Time constants $\tau ac$ and $\tau dc$ for an acceleration/deceleration motion are obtained based on Aac' and Adc' (S8). Upon completion of one operation cycle of the robot, a root mean square value of the monitored motor current is calculated and compared with a tolerance (S12). If the root mean square value exceeds the tolerance, the value of the parameter k is adjusted to be lowered to $\alpha k$ (S13).

FIG. 3

EP 0 794 475 A1

**Description**

Technical Field

The present invention relates to a minimum time control method for an industrial robot, and more particularly to a minimum time control method in which an operating duty is taken into consideration in order to prevent overheating of a servo motor for driving each axis of the robot.

Background Art

In controlling a robot, an effective control is achieved by calculating and setting an optimum (minimum) time constant in accordance with a motion and a posture of each axis, designing a path plan such that an intended acceleration/deceleration operation is executed under the set time constant, creating a motion command for each axis based on the path plan and transferring the command to a servo system, so as to reduce a cycle time by utilizing the maximum performance of motors for driving the individual axes.

Such control methods have been variously proposed and have been used widely. In these methods, there is a common concept of setting a time constant of the acceleration/deceleration motion as short as possible. The above control of setting a time constant of the acceleration/deceleration motion as short as possible is generally called as "minimum time control" or "maximum acceleration control" and is known from U.S. Pat. No. 5,325,467, for example.

An actual motor, however, has a thermal limit as well as various limitations derived from general performances (e.g., a maximum rotational speed and a maximum torque according to the rotational speed). Therefore, if the robot is operated for a long time with a large operating duty (for example, repeated operation with no interruption or no low-current driving) according to the conventional minimum-time control method, the motor would be overheated which might cause various inconveniences (such as deterioration, breakage and malfunction of the motor and its peripheral parts).

Thus, it is actually difficult to continuously operate a motor of the robot with maximum performance because of the thermal limit of the motor. Since the quantity of heat generated by a motor is regarded to be substantially proportional to a root mean square value of an electric current flowing in the motor, it is necessary to lower the root mean square value of the electric current of the motor for each axis by artificial adjustments, such as lowering of a command speed, increasing of an interruption time and increasing of a time constant, according to the conventional method.

Practically, however, it is actually difficult to determine in advance an appropriate extent of adjustment in conformity with the thermal limit since the quantity of heat generated by a motor largely depends on the operating condition such as an operating pattern and a weight of load. With continued operation with an insufficient adjustment, the motor would be overheated. To the contrary, the maximum time control can not be realized with an excessive adjustment, to cause an unnecessary extension of the cycle time. It would be a burden for a user to make readjustment each time the operating condition such as the operating pattern and the weight of load changes.

Disclosure of the Invention

It is an object of the present invention to provide a robot control method capable of automatically adjusting control conditions so as to keep a thermal limit of a motor for each axis, utilizing a concept of the minimum-time control to the utmost. It is another object of the invention to improve efficiency of various tasks using a robot without an overheat of the motor for each axis so as to reduce the burden of the user, by automatically adjusting the control conditions.

According to the present invention, the motor for each axis is automatically rendered to operate within a thermal limit by adjusting conditions of acceleration/deceleration motions, which are determined according to the minimum-time control method, in a stepwise manner as occasion demands, using monitoring results of a state of heat generation of the motor in every playback operation.

A minimum-time control method of the present invention comprises the steps of: reading an operation program; determining conditions of an acceleration/deceleration motion so as to minimize a time constant of the acceleration/deceleration motion based on the read operation program; adjusting the conditions of the acceleration/deceleration motion using a parameter for adjusting the conditions of the acceleration/deceleration motion stored in said robot controller; operating the robot under the conditions of the adjusted acceleration/deceleration motion; monitoring an quantity of heat generated by a motor for driving each axis of the robot in operation; discriminating whether or not the monitored quantity of heat is within a tolerance after a predetermined operation cycle is completed; and updating the parameter so as to suppress the quantity of heat generated by the motor if it is discriminated that the quantity of heat generated by the motor exceeds the tolerance and storing the updated parameter in the robot controller. The monitoring of the quantity of heat generated by the motor is performed by monitoring an electric current value of the motor in the operating cycle.

In a preferable form, a root mean square value of the monitored motor current value is compared with a predetermined tolerance. If it does not exceed the tolerance, the parameter value for adjusting the conditions of the acceleration/deceleration motion stored in the robot controller is kept unchanged. If it exceeds the tolerance, the parameter value is updated so as to suppress the quantity of heat generated by the motor. The condition the acceleration/deceleration motion to be adjusted is exemplified by an acceleration and a time constant.

The control method of the invention is capable of automatically find the conditions of the acceleration/deceleration motion so as to meet the thermal condition of the motor for each axis, utilizing the concept of the minimum-time control at most, after starting the robot operation. In a playback operation of a first operating cycle, the conditions of the acceleration/deceleration motion is determined according to the concept of the minimum-time control, to carry out the operation of the robot. During the playback operation, the state of heat generation of the motor for each axis is monitored in terms of the electric current value. From the monitoring result of the predetermined operating cycles, it is discriminated whether the thermal limit is met or not, and the conditions of the acceleration/deceleration motion is adjusted so as to reduce the quantity of heat generated by the motor for each axis, if necessary.

Specifically, if it is discriminated that the root mean square of the current value of the motor for each axis exceeds the tolerance, a value of acceleration, which is a basis of calculation of a time constant, is adjusted to be increased, or the time constant itself is adjusted to be lowered to reduce the quantity of heat to be generated by the motor in the following operation.

According to the method of the present invention, since the status of the robot is automatically guided to meet the thermal limit with utilizing the advantageous of the minimum-time control at most while the user repeatedly uses the robot, the robot is used under safe and efficient operating conditions, without assigning an unnecessary burden to the user.

Brief Description of the Drawings

FIG. 1 is a block diagram showing a principal portion of hardware of a robot control system for carrying out a control method of the present invention;
FIG. 2 is a block diagram schematically showing a procedure for operating a robot;
FIG. 3 is a flowchart showing a general procedure for determining conditions of an acceleration/deceleration motion based on the concept of the minimum-time control, and a procedure for adjusting the determined conditions of the acceleration/deceleration motion so as to meet the thermal limit; and
FIG. 4 is a flowchart showing a process of monitoring a motor current (root mean square value).

Best Mode of Carrying Out the Invention

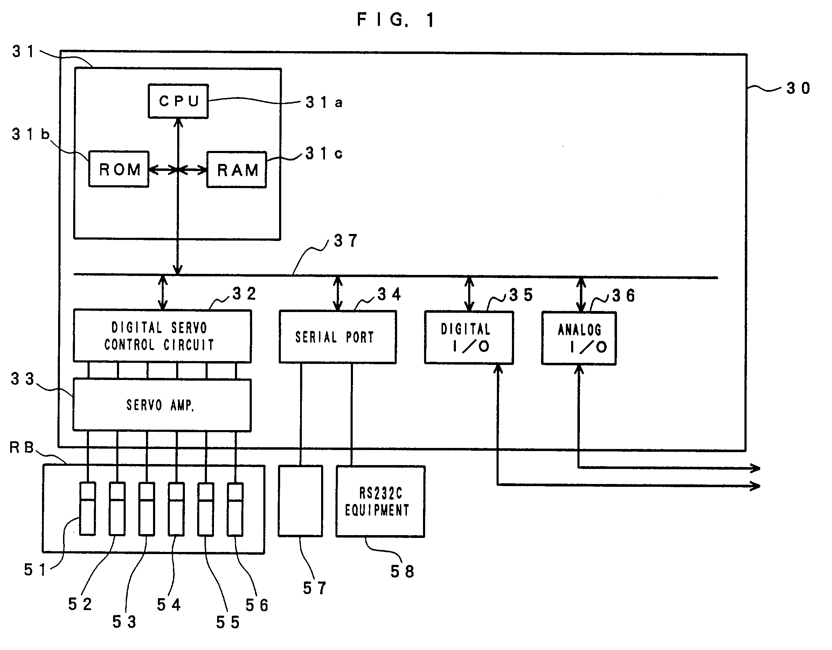

A control method of the invention can be carried out using a robot control system having an ordinary hardware architecture. A typical architecture of the robot control system is shown in FIG. 1.

In FIG. 1, the robot control system 30 is provided with a processor board 31 which comprises a central processing unit (CPU) 31a of a microprocessor, a ROM 31b and a RAM 31c.

The CPU 31a controls the whole robot control system 30 according to a system program stored in ROM 31b. There is formed a non-volatile memory area for storing taught data, position data, various set values, an operating program, etc. in considerable part of RAM 31c. A part of RAM 31c is used for temporarily store of data for calculation by the CPU 31a.

The processor board 31 is connected with a bus 37 and transfers commands and data to and from other parts in the robot control system 30 via the bus 37. First, a digital servo control circuit 32 connected to the processor board 31 drives servo motors 51-56 via a servo amplifier 33 based on commands from the CPU 31a. The servo motors 51-56 for driving respective axes are built in mechanical sections of respective axes of the robot RB.

A serial port 34 is connected with the bus 37, a teaching operation panel 57 with a liquid crystal display, and an RS232C equipment 58. The teaching operation panel 57 is used for inputting a program such as an operating program, position data, and other necessary set values. The bus 37 is connected with an input-output device for digital signals (digital I/O) 35 and an input-output device for analog signals (analog I/O) 36.

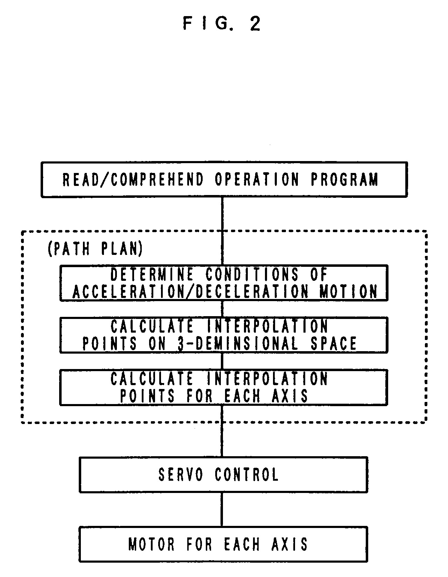

FIG. 2 is a block diagram showing a procedure for operating the robot. The operating program is read first and comprehended (decoded). A taught path, a command speed, etc. are thus designated.

Then, a path plan is designed based on the designated items (e.g., the taught path, the command speed). In this path plan, "determining conditions of an acceleration/deceleration motion", "calculating interpolation points in a three-dimensional space" and "creating interpolation points for every axis according to inverse-kinematics" are executed, and the created interpolation point is transferred to the servo control system for each axis as a motion command in a predetermined period, thus performing a servo control of the motor for each axis.

Regarding assignment of processing to the hardware, it is generally adopted that the main CPU 31a of the robot control system 30 takes charge of processing from comprehension of a program to creation of interpolation points for each axis, and a servo CPU in the digital servo control circuit 32 receives the interpolation point via a shared RAM, to perform the servo control of the motors 51-56 for respective axes.

In the present invention, it is a premise that the concept of minimum-time control is applied in "determining conditions of an acceleration/deceleration motion" executed in the block "planning of path" in FIG. 2. According to a procedure described below, a motor current is monitored while the motor is in operation, and it is discriminated whether or not modification of conditions of an acceleration/deceleration motion is necessary in view of the thermal limit. If the modification is determined to be necessary, the parameters for adjusting the condition of the acceleration/deceleration motion are modified.

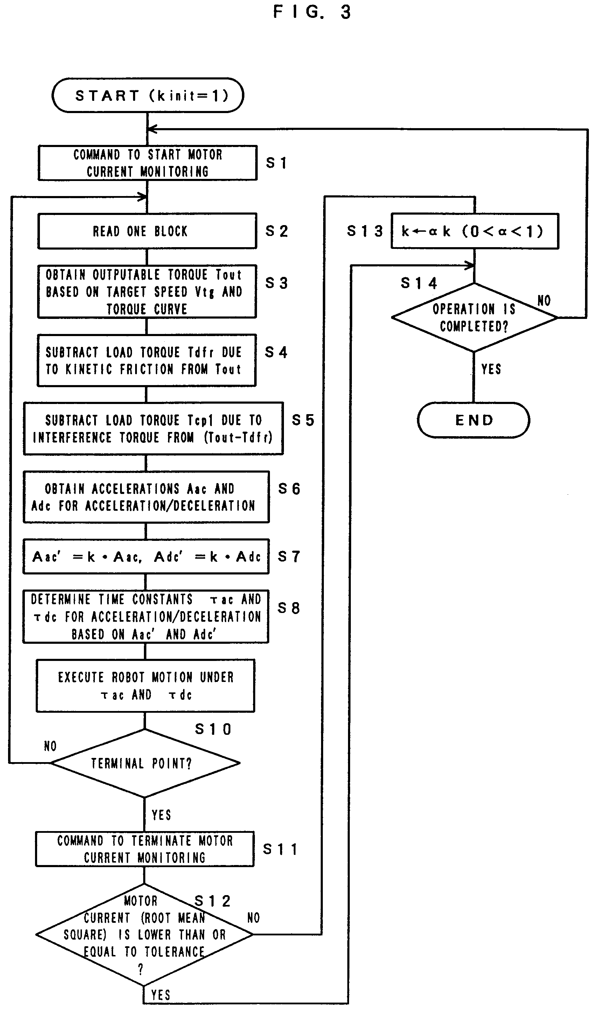

FIG. 3 is a flowchart showing a general procedure for determining conditions of an acceleration/deceleration motion based on the concept of the minimum-time control, and a procedure for adjusting the determined conditions of the acceleration/deceleration motion so as to meet the thermal limit. In the flowchart, k is a parameter for adjusting the conditions of acceleration/deceleration motion, and k init = 1 is set as an initial value in a register in the non-volatile memory area of RAM 31c.

As described below, the value of the parameter k is updated in view of the thermal limit, when necessary, and the latest value is stored in the register unless a reset operation is executed. Therefore, the value of k at the start of a subsequent cycle of operation is not necessarily be "1".

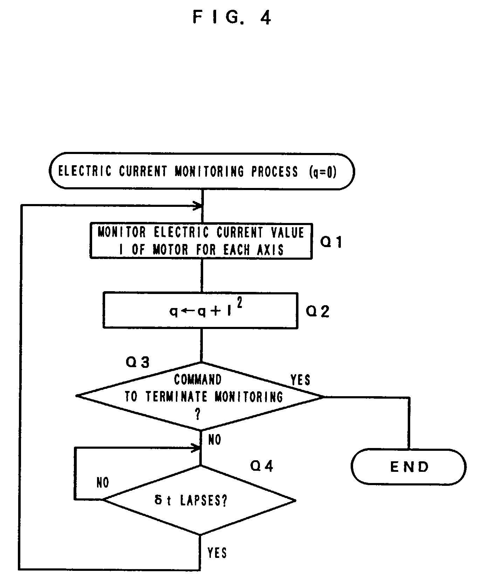

When starting the processing upon receipt of a command for starting a playback operation, a start command for monitoring an electric current (root mean square value) of motors for each axis is outputted (Step S1), and reading of a motion program is started (Step S2). Monitoring of the motor current is executed according to the procedure shown in the flowchart of FIG. 4, for example, using a multitask function of the robot control system.

Thus, when the processing is started upon receipt of a start command for monitoring the motor current, a current value I of the motor for each axis is monitored (Step Q1). The monitored current value I is squared, and the squared value is added to an integrated index value q (initial value q = 0) (Step S2). The result of discrimination in Step Q3 is negative unless a monitoring termination command is outputted in a subsequent Step S11, so that the procedure returns to Step Q1 to execute the next current monitoring at every lapse of a predetermined sampling time δt.

Subsequently, the processing of Steps Q1-Q4 are repeatedly executed until an output of the monitoring termination command is confirmed in Step Q3. The integrated index value q obtained for each axis is used to calculate a root-mean-square value of the motor current in a subsequent Step S12. The monitoring of the motor current for each axis is executed by, for example, reading a torque command created in the digital servo circuit, upon receiving a command from CPU 31a.

In Step S3, a torque Tout outputable in acceleration/deceleration is obtained from a target speed Vtg of each axis which is determined based on the read program data and the current posture of the robot, and torque curve data (data representing a relation between the motor speed and the outputable torque) set in RAM 31c.

Generally, each axis of the robot is associated with kinetic friction and receives the influence of an interference torque from the other axes. Therefore, the outputable torque Tout could not be directly used for acceleration/deceleration. In order to obtain a torque component available for acceleration/deceleration, a load torque Tdfr due to kinetic friction and a load torque Tcpl due to the interference torque are subtracted from the outputable torque Tout in Steps S4 and S5 following Step 3. Torques Tavail(ac) and Tavail(dc) available for acceleration/deceleration are thus obtained.

The load torque Tdfr due to kinetic friction is evaluated as a positive value in acceleration and as a negative value in deceleration. The load torque Tcpl due to the interference torque is evaluated as a positive or negative value depending on the direction of motion.

In the next Step S6, an acceleration Aac of accelerating motion and an acceleration Adc of decelerating motion are calculated for each axis. These accelerations Aac and Adc are respectively obtained by dividing Tavail(ac) and Tavail(dc) by load inertia of the motor, which is calculated from the posture and the structural parameters of the robot.

The next Step S7 is for adjusting accelerations Aac and Adc calculated by the minimum-time control method, if necessary, and the concept of the present invention is present in this step. Thus, accelerations Aac' and Adc' are respectively obtained by multiplying accelerations Aac and Adc by the value of the parameter k in the present processing period. In the first playback operation, the acceleration is not substantially adjusted as k = 1.

Subsequently, a time constant τac for acceleration and a time constant τdc for deceleration are obtained for each axis by dividing the speed of each axis, which is determined based on the target speed Vtg of the tool tip, by each of accelerations Aac' and Adc' obtained in Step S7 (Step S8). Unless an operation of respective-axes motion is designated by the motion program, the maximum one of the acceleration time constants τac and τdc calculated for each axis is used commonly for all axes.

Under thus determined conditions of acceleration/deceleration motion, the processing for a robot motion of one block, including processing for a subsequent path plan and outputting a motion command to the servo control system (see FIG. 2 and associated description), is executed (Step S9). If there is left a further motion for the robot (if a negative result is outputted in discrimination of Step S10), the procedure returns to Step S2, where the program data of the next one block is read. Subsequently, the processing of Steps S1-S10 is repeatedly executed until a positive result is outputted in discrimination of Step S10.

Upon completion of one operation cycle of the robot as the positive result is outputted in discrimination of Step S10, a command for terminating the motor current monitoring is outputted (Step S11), so that the integration of the integrated index value q is terminated. In the next Step S12, the root-mean-square value $[1^2]avg$ of the motor current of one operating cycle is calculated and it is discriminated whether or not the value $[1^2]avg$ is lower than or equal to a predetermined tolerance value $[1^2]allow$. The value $[1^2]avg$ is calculated by the following equation, using the aforesaid integrated index value q.

$$[1^2]avg = q/T$$

where T is a time representing a length of one operating cycle from a time when a command for starting the monitoring of the motor current is outputted to a time when a command for terminating the monitoring of the motor current.

If $[1^2]avg > [1^2]allow$, it is judged that an adjustment of the conditions of the acceleration/deceleration motion is necessary (namely, the conditions do not meet the thermal limit), and the procedure proceeds to Step S13 in which the value of the parameter k is adjusted to lower it to $\alpha k$. $\alpha$ is a predetermined coefficient of a value approximately 1, satisfying $0 < \alpha < 1$. Assuming that $\varepsilon$ represents a quantity (positive value) corresponding to the very small value for adjusting a time constant for one processing period (one ITP) in executing the path plan process, $\alpha = 1 - \varepsilon$ is set. For example, when $\varepsilon = 0.01$, $\alpha = 0.99$.

If $[1^2]avg \leq [1^2]allow$, it is judged that an adjustment of the conditions of the acceleration/deceleration motion is not unnecessary (namely, the conditions do not meet the thermal limit), so that the value of the parameter k is not adjusted.

With the above procedure, the processing of one operating cycle is completed. The method of the invention is carried out usually while a task is being executed by the user. Practically, there are very many occasions that the robot operation is repeatedly executed. Thus, in the next Step S14, it is discriminated whether the operation is to be terminated or to be continued. If it is discriminated that the operation is to be continued, the procedure returns to Step S1 to execute the processing of Steps S1-S12.

In any event, the processing of Step S1 and the following Steps are executed with the value of the updated parameter k, when starting the operation again immediately after having been terminated or on the next day. For example, if the result of discrimination is negative in Step S12 in the first operation, the values of accelerations Aac and Adc, which have been determined according to the minimum-time control method without consideration of the thermal limit, are adjusted to be lowered in accordance with the value of $\alpha$, in Step S7 of the second operation.

The root mean square value of the motor current in the second operation is lowered in comparison with that in the first operation, so that the quantity of heat generated by the motor is expected to be lowered. As a result, in Step 12 of the second operation, it is expected that the positive result of discrimination is outputted. As the operation is performed repeatedly, the conditions of the acceleration/deceleration motion are gradually adjusted, when necessary, to reduce the quantity of heat generated by the motor.

Thus, if the robot operates in unsuitable conditions in view of the thermal limit at an earlier stage where the user begins to use the robot, the robot will operate in suitable conditions in view of the thermal limit by a kind of self-learning function in the repeated use. In general, as a rise in temperature due to the heat generated by the motor would be gradually manifest as the robot is operated continuously for a long period of time, it is possible to avoid the problem of the heat generation by the motor.

In the above embodiment, one operation cycle of the robot is regarded as one playback operation of one operating program. However, this is merely one example. The one operation cycle may be defined flexibly to meet various ways of using the robot required by the user. For example, in a case where a number of operation programs are successively executed to complete one operation on a set of workpieces, the monitoring of the motor current may be started and terminated, and also the discrimination based on the result of monitoring may be made, regarding the whole operation (including every suspending time of the robot) as a single operating cycle.

There are known various ways of determining the conditions of the acceleration/deceleration motion (e.g., acceleration and time constant for acceleration/deceleration) according to the minimum-time control method as well as various ways of calculating an available torque (what is to be considered among kinetic friction, interference torque and static load torque, etc., and evaluation and calculation method of these factors). As long as the concept of the minimum-time control is adopted, any of the above known methods may be used. The details of general matters regarding the way of determining the conditions of the acceleration/deceleration motion utilizing the minimum-time-control method and the way of calculating an available torque are omitted here. The minimum-time control method is disclosed in detail in U.S. Patent No. 5,325,467, for example and the disclosure thereof is herein incorporated as reference.

Further, in the above embodiment, an acceleration is used as a parameter of the condition of the acceleration/deceleration motion to be adjusted. Alternatively, a time constant may be used as the parameter to be adjusted. In this case, as a substitute for the processing of Step S7 in the flowchart of FIG. 3, a time constant obtained based on the acceleration determined according to the minimum-time control method is adjusted to be increased by a predetermined rate.

According to the present invention, the conditions of the acceleration/deceleration motion are automatically adjusted so as to keep a thermal limit of the motor for each axis utilizing the concept of the minimum-time control at most. It is therefore possible to prevent an overheat of the motor, without unnecessary extension of the cycle time and without assigning a burden to the user.

## Claims

1. A robot control method for performing a minimum-time control in consideration of an operation duty, using a robot controller having a software processing function, said method comprising the steps of:

(a) reading an operation program;

(b) determining conditions of an acceleration/deceleration motion so as to minimize a time constant of the acceleration/deceleration motion based on the operation program read in said step (a);

(c) adjusting the conditions of the acceleration/deceleration motion determined in said step (b), using a parameter for adjusting the conditions of the acceleration/deceleration motion stored in said robot controller;

(d) operating the robot under the conditions of the acceleration/deceleration motion adjusted in said step (b);

(e) monitoring an quantity of heat generated by a motor for driving each axis of the robot in operation;

(f) discriminating whether or not said quantity of heat monitored in said step (e) is within a tolerance after at least one set of said steps (a)-(e) are executed to complete a predetermined operation cycle; and

(g) updating said parameter so as to suppress the quantity of heat generated by the motor if it is discriminated that the quantity of heat generated by the motor exceeds said tolerance in said step (f) and storing the updated parameter in said robot controller,

wherein said monitoring in said step (e) is performed by monitoring an electric current value of the motor in said operating cycle.

2. A robot control method for performing a minimum-time control in consideration of an operation duty, using a robot controller having a software processing function, said method comprising the steps of:

(a) reading an operation program;

(b) determining conditions of an acceleration/deceleration motion so as to minimize a time constant of the acceleration/deceleration motion based on the operation program read in said step (a);

(c) adjusting the conditions of the acceleration/deceleration motion determined in said step (b), using a parameter for adjusting the conditions of the acceleration/deceleration motion stored in said robot controller;

(d) operating the robot under the conditions of the acceleration/deceleration motion adjusted in said step (b);

(e) monitoring an quantity of heat generated by a motor for driving each axis of the robot in operation;

(f) discriminating whether or not said quantity of heat monitored in said step (e) is within a tolerance after at least one set of said steps (a)-(e) are executed to complete a predetermined operation cycle; and

(g) updating said parameter so as to suppress the quantity of heat generated by the motor if it is discriminated that the quantity of heat generated by the motor exceeds said tolerance in said step (f) and storing the updated parameter in said robot controller,

wherein said monitoring in said step (e) is performed by monitoring an electric current value of the motor in said operating cycle, and

said discrimination in said step (g) is performed by comparing a root mean square value of said monitored electric current value with a predetermined tolerance.

3. A robot control method for performing a minimum-time control in consideration of an operation duty, using a robot controller having a software processing function, said method comprising the steps of:

(a) reading an operation program;

(b) determining conditions of an acceleration/deceleration motion so as to minimize a time constant of the acceleration/deceleration motion based on the operation program read in said step (a); (c) adjusting the conditions of the acceleration/deceleration motion determined in said step (b), using a parameter for adjusting the conditions of the acceleration/deceleration motion stored in said robot controller;

(d) operating the robot under the conditions of the acceleration/deceleration motion adjusted in said step (b);

(e) monitoring an quantity of heat generated by a motor for driving each axis of the robot in operation;

(f) discriminating whether or not said quantity of heat monitored in said step (e) is within a tolerance after at least one set of said steps (a)-(e) are executed to complete a predetermined operation cycle; and

(g) updating said parameter so as to suppress the quantity of heat generated by the motor if it is discriminated that the quantity of heat generated by the motor exceeds said tolerance in said step (f), and storing the updated parameter in said robot controller,

wherein said monitoring step (e) is performed by monitoring an electric current value of the motor in said operating cycle,

said discriminating step (g) is performed by comparing a root mean square value of said monitored electric current value with a predetermined tolerance, and

said updating step (g) is performed by updating said parameter so that an acceleration of the acceleration/deceleration motion of the robot is adjusted to be lowered, if it is discriminated that said root mean square value exceeds said predetermined tolerance.

4.  A robot control method for performing a minimum-time control in consideration of an operation duty, using a robot controller having a software processing function, said method comprising the steps of:

    (a) reading an operation program;
    (b) determining conditions of an acceleration/deceleration motion so as to minimize a time constant of the acceleration/deceleration motion based on the operation program read in said step (a);
    (c) adjusting the conditions of the acceleration/deceleration motion determined in said step (b), using a parameter for adjusting the conditions of the acceleration/deceleration motion stored in said robot controller;
    (d) operating the robot under the conditions of the acceleration/deceleration motion adjusted in said step (b);
    (e) monitoring an quantity of heat generated by a motor for driving each axis of the robot in operation;
    (f) discriminating whether or not said quantity of heat monitored in said step (e) is within a tolerance after at least one set of said steps (a)-(e) are executed to complete a predetermined operation cycle; and
    (g) updating said parameter so as to suppress the quantity of heat generated by the motor if it is discriminated that the quantity of heat generated by the motor exceeds said tolerance in said step (f), and storing the updated parameter in said robot controller,
    wherein said monitoring step (e) is performed by monitoring an electric current value of the motor in said operating cycle,
    said discriminating step (g) is performed by comparing a root mean square value of said monitored electric current value with a predetermined tolerance, and
    said updating step (g) is performed by updating said parameter so that the time constant of the acceleration/deceleration motion of the robot is adjusted to be increased, if it is discriminated that said root mean square value exceeds said predetermined tolerance.

FIG. 1

EP 0 794 475 A1

FIG. 2

```
┌─────────────────────────────────────────────┐
│     READ/COMPREHEND OPERATION PROGRAM        │
└─────────────────────────────────────────────┘
                      │
┌ ─ ─ ─ ─ ─ ─ ─ ─ ─ ─ │ ─ ─ ─ ─ ─ ─ ─ ─ ─ ─ ─ ─ ┐
  (PATH PLAN)          │
│  ┌─────────────────────────────────────────┐ │
    │          DETERMINE CONDITIONS OF        │
│  │  ACCELERATION/DECELERATION MOTION       │ │
    └─────────────────────────────────────────┘
│                     │                         │
   ┌─────────────────────────────────────────┐
│  │        CALCULATE INTERPOLATION          │  │
   │    POINTS ON 3-DEMINSIONAL SPACE        │
│  └─────────────────────────────────────────┘  │
                      │
│  ┌─────────────────────────────────────────┐  │
   │        CALCULATE INTERPOLATION          │
│  │         POINTS FOR EACH AXIS            │  │
   └─────────────────────────────────────────┘
└ ─ ─ ─ ─ ─ ─ ─ ─ ─ ─ │ ─ ─ ─ ─ ─ ─ ─ ─ ─ ─ ─ ─ ┘
                      │
        ┌─────────────────────────────┐
        │        SERVO CONTROL        │
        └─────────────────────────────┘
                      │
        ┌─────────────────────────────┐
        │     MOTOR FOR EACH AXIS     │
        └─────────────────────────────┘
```

FIG. 3

START (kinit=1)

COMMAND TO START MOTOR
CURRENT MONITORING | S1

READ ONE BLOCK | S2

OBTAIN OUTPUTABLE TORQUE Tout
BASED ON TARGET SPEED Vtg AND
TORQUE CURVE | S3

SUBTRACT LOAD TORQUE Tdfr DUE
TO KINETIC FRICTION FROM Tout | S4

SUBTRACT LOAD TORQUE Tcpl DUE TO
INTERFERENCE TORQUE FROM (Tout-Tdfr) | S5

OBTAIN ACCELERATIONS Aac AND
Adc FOR ACCELERATION/DECELERATION | S6

$Aac' = k \cdot Aac, \quad Adc' = k \cdot Adc$ | S7

DETERMINE TIME CONSTANTS $\tau ac$ AND
$\tau dc$ FOR ACCELERATION/DECELERATION
BASED ON Aac' AND Adc' | S8

EXECUTE ROBOT MOTION UNDER
$\tau ac$ AND $\tau dc$

S10

TERMINAL POINT? — NO

YES

COMMAND TO TERMINATE MOTOR
CURRENT MONITORING | S11

MOTOR S12
CURRENT (ROOT MEAN
SQUARE) IS LOWER THAN OR
EQUAL TO TOLERANCE
? — NO

YES

S13 | $k \leftarrow \alpha k \quad (0 < \alpha < 1)$

S14

OPERATION IS
COMPLETED? — NO

YES

END

10

F I G. 4

ELECTRIC CURRENT MONITORING PROCESS (q=0)

MONITOR ELECTRIC CURRENT VALUE
I OF MOTOR FOR EACH AXIS          Q1

$q \leftarrow q + I^2$          Q2

Q3
COMMAND
TO TERMINATE MONITORING          YES
?

NO

Q4
$\delta$ t LAPSES?

NO

END

YES

## INTERNATIONAL SEARCH REPORT

| | International application No. |
|---|---|
| | PCT/JP96/02784 |

**A. CLASSIFICATION OF SUBJECT MATTER**

Int. Cl$^6$  G05B19/416

According to International Patent Classification (IPC) or to both national classification and IPC

**B. FIELDS SEARCHED**

Minimum documentation searched (classification system followed by classification symbols)

Int. Cl$^6$  G05B19/404, G05B19/416

Documentation searched other than minimum documentation to the extent that such documents are included in the fields searched

| | |
|---|---|
| Jitsuyo Shinan Koho | 1965 – 1995 |
| Jitsuyo Shinan Kokai Koho | 1971 – 1994 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 1-58460, A (Okuma Corp.), March 6, 1989 (06. 03. 89), Page 2, upper left column, line 19 to upper right column, line 20 (Family: none) | 1 – 4 |
| Y | JP, 4-88506, A (NEC Corp.), March 23, 1992 (23. 03. 92), Page 3, upper left column, line 16 to upper right column, line 4 (Family: none) | 1 – 4 |
| Y | JP, 7-87787, A (Fanuc Ltd.), March 31, 1995 (31. 03. 95), Items 0026 to 0027 (Family: none) | 1 – 4 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| December 17, 1996 (17. 12. 96) | December 25, 1996 (25. 12. 96) |

| Name and mailing address of the ISA/ | Authorized officer |
|---|---|
| Japanese Patent office | |
| Facsimile No. | Telephone No. |

Form PCT/ISA/210 (second sheet) (July 1992)